# EUROPÄISCHE PATENTSCHRIFT

(11) **EP 4 095 396 B1**
(45) Veröffentlichungstag und Bekanntmachung des Hinweises auf die Patenterteilung: **06.09.2023**
(21) Anmeldenummer: 22172366.1
(22) Anmeldetag: 09.05.2022
(51) Int. Cl.: F16B 5/02

(54) **TOLERANZAUSGLEICHSVORRICHTUNG**
TOLERANCE COMPENSATING DEVICE
DISPOSITIF DE COMPENSATION DE LA TOLÉRANCE

(30) Priorität: 21.05.2021 DE 102021113281
(43) Veröffentlichungstag der Anmeldung: 30.11.2022
(73) Patentinhaber: Witte Automotive GmbH, 42551 Velbert (DE)
(72) Erfinder: BENTE, Jan, Sprockhövel (DE); RADANOVIC, Vladimir, Köln (DE)
(74) Vertreter: Manitz Finsterwald Patent- und Rechtsanwaltspartnerschaft mbB

(56) Entgegenhaltungen:
- DE-A1-102007 037 242
- DE-U1- 20 013 863

## Beschreibung

Die Erfindung betrifft eine Toleranzausgleichsvorrichtung zur Überbrückung eines Abstandes zwischen zwei miteinander zu verbindenden Bauteilen, umfassend ein Grundelement und ein in das Grundelement einschraubbares Ausgleichselement.

Eine derartige Toleranzausgleichsvorrichtung ist grundsätzlich bekannt. Üblicherweise handelt es sich bei dem Grundelement und dem Ausgleichselement um zwei lose Einzelteile, wobei das Ausgleichselement während des Transports der Toleranzausgleichsvorrichtung zu ihrem bestimmungsgemäßen Montageort in das Grundelement eingeschraubt ist. Um zu verhindern, dass sich das Ausgleichselement während des Transports unbeabsichtigterweise von dem Grundelement lösen kann, ist bei einer bekannten Toleranzausgleichsvorrichtung ein Kunststoffring an dem Grundelement angebracht, welcher eine Transportsicherung für das Ausgleichselement ausbildet. Derselbe Kunststoffring oder ein weiterer an dem Grundelement angebrachter Kunststoffring kann als Schnittstelle zum Bauteil eines Kunden Befestigungsmittel zur Befestigung der Toleranzausgleichsvorrichtung an einem der zu verbindenden Bauteile ausbilden, beispielsweise in Form von Rastclipsen.

In der Praxis tritt immer häufiger der Fall auf, dass das Grundelement selbst die Kundenschnittstelle bildet und das Grundelement zu diesem Zweck an dem Bauteil beispielsweise eines System- oder Modullieferanten bereits fest verbaut ist.

Der Erfindung liegt die Aufgabe zugrunde, eine Toleranzausgleichsvorrichtung zu schaffen, die es einem System- oder Modullieferanten auf einfache Weise erlaubt, das Bauteil einschließlich Grundelement und darin eingeschraubtem Ausgleichselement an seinen Kunden, zum Beispiel einen Fahrzeughersteller, zu transportieren, ohne dass sich das Ausgleichselement von dem Bauteil lösen kann.

Die Aufgabe wird durch eine Toleranzausgleichsvorrichtung mit den Merkmalen des Anspruchs 1 und insbesondere dadurch gelöst, dass das Grundelement mindestens einen Anschlag ausbildet und das Ausgleichselement mindestens ein elastisch verformbares Transportsicherungsmittel aufweist, welches derart ausgebildet ist, dass es für ein Einschrauben des Ausgleichselements in das Grundelement den Anschlag unter temporärer Verformung überwinden muss. Entsprechend muss das Transportsicherungsmittel umgekehrt auch beim Herausschrauben des Ausgleichselements aus dem Grundelement den Anschlag überwinden, wodurch das in das Grundelement eingeschraubte Ausgleichselement gegen ein unbeabsichtigtes Herausdrehen aus dem Grundelement, beispielsweise während eines Transports, gesichert ist.

Ein allgemeiner Gedanke der Erfindung besteht somit darin, die Funktionalität der Transportsicherung auf das Ausgleichselement zu verlagern. Auf diese Weise kann das Grundelement erheblich einfacher ausgebildet werden und, beispielsweise von einem System- oder Modullieferanten, mit entsprechend geringem Aufwand in das Bauteil seines Systems oder Moduls integriert werden. Insbesondere kann das Grundelement als Kundenschnittstelle auf einfache Weise an gewünschte Kundenspezifikationen angepasst werden, während die Funktionalität des Toleranzausgleichs, der Transportsicherung und gegebenenfalls einer Eindrehbegrenzung durch den Hersteller des Ausgleichselements bereitgestellt wird.

Vorteilhafte Ausbildungen der Erfindung sind den abhängigen Ansprüchen, der Beschreibung und der Zeichnung zu entnehmen.

Gemäß einer Ausführungsform weist das Ausgleichselement mindestens einen Endanschlag auf, welcher mit dem oder einem Anschlag des Grundelements in Eingriff bringbar ist, um die Einschraubbewegung des Ausgleichselements in das Grundelement zu begrenzen. Der Endanschlag des Ausgleichselements verhindert, dass das Ausgleichselement auf Block in das Grundelement hineingedreht und anschließend nicht mehr aus diesem herausgedreht werden kann. Der Endanschlag trägt somit zur Sicherstellung einer dauerhaft zuverlässigen Funktion der Toleranzausgleichsvorrichtung bei.

Gemäß einer weiteren Ausführungsform bildet das Ausgleichselement einen radial vorspringenden Kragen aus. Beispielsweise kann eine dem Grundelement abgewandte Seite des Kragens eine Anlagefläche zur Anlage an dem anderen Bauteil definieren. Der Kragen sorgt in diesem Fall für eine verbesserte Kraftaufnahme, wenn sich die zwischen den miteinander verbundenen Bauteilen angeordnete Toleranzausgleichsvorrichtung an dem anderen Bauteil abstützt, und trägt somit letztlich zu einer zuverlässigeren Verbindung der Bauteile bei. Alternativ oder zusätzlich kann der Kragen zu einer Begrenzung der Einschraubbewegung des Ausgleichselements in das Grundelement beitragen.

Des Weiteren kann das mindestens eine elastisch verformbare Transportsicherungsmittel durch eine von dem Kragen des Ausgleichselements in Richtung Grundelement zumindest bereichsweise axial vorspringende Federzunge gebildet sein. Die axiale Richtung ist in diesem Kontext durch die Längsmittelachse des Gewindes des Ausgleichselements definiert, mit welchem das Ausgleichselement in das Grundelement eingeschraubt wird.

Gemäß einer konstruktiv besonders einfachen Ausführungsform ist ein Kunststoffring drehfest an dem Kragen angebracht. Beispielsweise kann der Kunststoffring auf den Kragen aufgepresst, aufgeschrumpft oder an diesen angeklebt sein. Vorteilhafterweise bildet der Kunststoffring das mindestens eine elastisch verformbare Transportsicherungsmittel und optional mindestens einen Endanschlag des Ausgleichselements aus.

Um die Handhabung des Ausgleichselements, insbesondere das Hineindrehen des Ausgleichselements in das Grundelement, zu erleichtern, weist der Kunststoffring vorteilhafterweise eine Mantelfläche mit einer die Griffigkeit erhöhenden Struktur auf, beispielsweise mit einer Rändelung oder mit einer Vielzahl von Planflächen.

Gemäß einer weiteren Ausführungsform ist das mindestens eine elastisch verformbare Transportsicherungsmittel durch eine Federzunge gebildet, die sich in Umfangsrichtung erstreckt und die einen radial nach außen gerichteten Vorsprung ausbildet, welcher über ein Außengewinde des Ausgleichselements radial nach außen hervorsteht. Beim Einschrauben des Ausgleichselements in das Grundelement lässt sich die Federzunge entgegen ihrer Federkraft radial nach innen drücken, um einem Innengewinde des Grundelements auszuweichen. Um den Eintritt des Ausgleichselements in das Grundelement zu erleichtern, kann der Vorsprung eine Schrägfläche ausbilden, auf die das Innengewinde des Grundelements aufläuft, um die Federzunge radial nach innen zu verlagern.

Gemäß noch einer weiteren Ausführungsform ist der mindestens eine Anschlag des Grundelements durch eine radial vorspringende Rippe, durch einen Steg oder Wandabschnitt, der eine in einer dem Ausgleichselement zugewandten Oberfläche des Grundelements ausgebildete Tasche oder Nut begrenzt, durch eine Stirnseite des Grundelements und/oder durch einen radial nach innen gerichteten Vorsprung des Grundelements definiert.

Grundsätzlich kann ein und derselbe Anschlag des Grundelements mit dem Transportsicherungsmittel und dem Endanschlag des Ausgleichselements zusammenwirken und somit eine Doppelfunktion erfüllen, indem er sowohl zur Transportsicherung als auch zur Eindrehbegrenzung des Ausgleichselements beiträgt. Alternativ kann das Grundelement einen ersten Anschlag für ein Zusammenwirken mit dem Transportsicherungsmittel und einen zweiten Anschlag für ein Zusammenwirken mit einem Endanschlag des Ausgleichselements ausbilden.

Gemäß noch einer weiteren Ausführungsform ist das Grundelement ein integraler Bestandteil des einen Bauteils. Dabei kann das Grundelement durch das Bauteil selbst geformt sein oder stoff- und/oder kraftschlüssig mit diesem verbunden sein, beispielsweise an das Bauteil angeschweißt, angelötet, angespritzt oder angeklebt sein oder auf das Bauteil aufgepresst oder in das Bauteil eingepresst sein.

Weiterer Gegenstand der Erfindung ist ein Ausgleichselement für eine Toleranzausgleichsvorrichtung, insbesondere der voranstehend beschriebenen Art, umfassend mindestens ein elastisch verformbares Transportsicherungsmittel, welches derart ausgebildet ist, dass es für ein Einschrauben des Ausgleichselements in ein korrespondierendes Grundelement einen Anschlag des Grundelements unter temporärer Verformung überwinden muss. Durch ein solches Ausgleichselement lassen sich, insbesondere in Verbindung mit einem entsprechenden Grundelement, die voranstehend beschriebenen Vorteile entsprechend realisieren.

Nachfolgend wird die Erfindung rein beispielhaft anhand möglicher Ausführungsformen unter Bezugnahme auf die beigefügte Zeichnung beschrieben. Es zeigen:
- Fig. 1A: eine erste Ausführungsform einer erfindungsgemäßen Toleranzausgleichsvorrichtung mit getrenntem Grundelement und Ausgleichselement, wobei das Ausgleichselement in Schnittansicht dargestellt ist;
- Fig. 1B: die Toleranzausgleichsvorrichtung von Fig. 1A mit in das Grundelement eingeschraubtem Ausgleichselement;
- Fig. 2A: eine zweite Ausführungsform einer erfindungsgemäßen Toleranzausgleichsvorrichtung mit getrenntem Grundelement und Ausgleichselement;
- Fig. 2B: eine Schnittansicht der Toleranzausgleichsvorrichtung von Fig. 2A mit in das Grundelement eingeschraubtem Ausgleichselement;
- Fig. 2C: eine perspektivische Ansicht des Ausgleichselements von Fig. 2A;
- Fig. 2D: eine perspektivische Ansicht des Grundelements von Fig. 2A;
- Fig. 2E: eine erste Detailansicht des in das Grundelement eingeschraubten Ausgleichselements;
- Fig. 2F: eine zweite Detailansicht des in das Grundelement eingeschraubten Ausgleichselements;
- Fig. 3A: eine dritte Ausführungsform einer erfindungsgemäßen Toleranzausgleichsvorrichtung mit getrenntem Grundelement und Ausgleichselement;
- Fig. 3B: eine Detailansicht des Ausgleichselements von Fig. 3A.
- Fig. 4A: eine Schnittansicht einer vierten Ausführungsform einer Toleranzausgleichsvorrichtung, die unter den Wortlaut des Anspruchs 1 nicht fällt;

- Fig. 4B: ein Grundelement der Toleranzausgleichsvorrichtung von Fig. 4A;
- Fig. 4C: ein Ausgleichselement der Toleranzausgleichsvorrichtung von Fig. 4A;

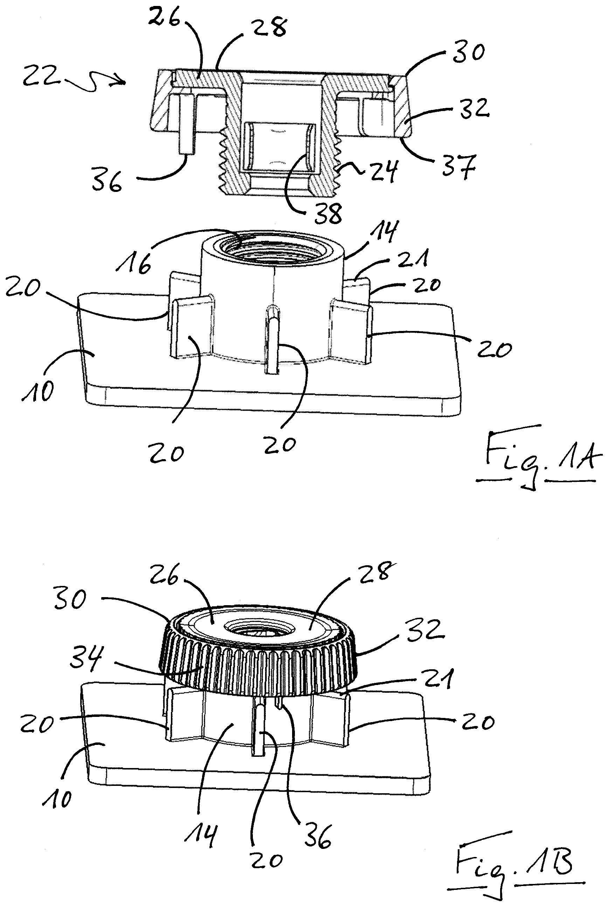

In Fig. 1A und 1B ist eine erste Ausführungsform einer Toleranzausgleichsvorrichtung dargestellt, welche zur Überbrückung eines Abstandes zwischen zwei mittels eines nicht gezeigten Verbindungselements, z.B. einer Schraube oder eines Gewindebolzens, miteinander zu verbindenden Bauteile dient, von denen ein erstes Bauteil 10 in Fig. 1A dargestellt ist.

Die Toleranzausgleichsvorrichtung umfasst ein Grundelement 14, welches in das erste Bauteil 10 integriert ist, insbesondere durch das erste Bauteil 10 selbst gebildet oder mit dem ersten Bauteil fest, insbesondere stoffschlüssig, verbunden ist. Beispielsweise kann das Grundelement 14 an das erste Bauteil 10 angeschweißt oder angeklebt sein. Das Grundelement 14 weist eine hohlzylindrische Grundform auf und bildet ein Innengewinde 16 aus, dessen Längsmittelachse eine axiale Richtung definiert.

Aus einer Mantelfläche 18 des Grundelements 14 gehen mehrere radial nach au-ßen vorspringende Rippen 20 hervor, deren jeweilige Unterseiten mit dem ersten Bauteil 10 in Kontakt stehen und insbesondere mit diesem stoffschlüssig verbunden sein können. Die dem ersten Bauteil 10 abgewandten Oberseiten 21 der Rippen 20 erstrecken sich in einer zur Längsmittelachse des Innengewindes 16 senkrechten Ebene.

Im vorliegenden Ausführungsbeispiel ist das Grundelement 14 mit sechs Rippen 20 versehen, welche in Umfangsrichtung gesehen gleich verteilt, d.h. also mit einem Winkelabstand von 60° zueinander um das Grundelement 14 herum angeordnet sind. Grundsätzlich ist aber auch eine andere gerade oder ungerade Anzahl von Rippen 20 größer als zwei vorstellbar.

Die Toleranzausgleichsvorrichtung umfasst ferner ein Ausgleichselement 22, welches seinerseits eine hohlzylindrische Grundform aufweist und in einem unteren Bereich ein an das Innengewinde 16 des Grundelements 14 angepasstes Außengewinde 24 ausbildet, sodass das Ausgleichselement 22 in das Grundelement 14 hineingeschraubt bzw. aus diesem herausgeschraubt werden kann. Im Bereich seiner dem ersten Bauteil 10 abgewandten Oberseite bildet das Ausgleichselement 22 einen radial vorspringenden umlaufenden Kragen 26 aus, dessen Oberseite eine Anlagefläche 28 definiert, mit welcher die Toleranzausgleichsvorrichtung an dem mit dem ersten Bauteil 10 zu verbindenden zweiten Bauteil zur Anlage kommt.

An dem Kragen 26 ist ein Kunststoffring 30 drehfest angebracht, zum Beispiel auf diesen aufgepresst, welcher eine sich von der Anschlagfläche 28 in Richtung des ersten Bauteils 10 erstreckende umlaufende Außenwand 32 ausbildet, deren Außenseite zur Verbesserung der Griffigkeit mit einer Rändelung 34 versehen ist. Der Kunststoffring 30 bildet ferner eine elastische Transportsicherungszunge 36 aus, welche sich innerhalb der Außenwand 32 im Wesentlichen parallel zur Längsmittelachse des Außengewindes 24, d.h. also axial, in Richtung des ersten Bauteils 10 erstreckt und nach unten über den dem ersten Bauteil 10 zugewandten unteren Rand 37 der Außenwand 32 hervorsteht.

Zusätzlich zu der Fig. 1A und 1B erkennbaren Transportsicherungszunge 36 kann auch noch wenigstens eine weitere Transportsicherungszunge 36 an dem Kunststoffring 30 vorgesehen sein, welche wie die gezeigte Transportsicherungszunge 36 ausgebildet ist. Im Fall von mehreren Transportsicherungszungen 36 können diese in Umfangsrichtung gesehen im Wesentlichen gleichverteilt an dem Kunststoffring 30 angeordnet sein.

Die axiale Abmessung der Außenwand 32, gewissermaßen also die Höhe der Außenwand 32, ist derart an die Höhe der Rippen 20 angepasst, dass der untere Rand 37 der Außenwand 32 auf den Oberseiten 21 der Rippen 20 aufsitzt, wenn das Ausgleichselement 22 wie in Fig. 1B gezeigt maximal in das Grundelement 14 eingeschraubt ist. Der untere Rand 37 der Außenwand 32 bildet mit anderen Worten also einen Endanschlag, welcher eine Endposition des Ausgleichselements 22 definiert, d.h. also die Eindrehbewegung des Ausgleichselements 22 in das Grundelement 14 begrenzt und verhindert, dass das Ausgleichselement 22 auf Block in das Grundelement 14 eingeschraubt und danach nicht mehr ohne weiteres aus diesem gelöst werden kann.

Der in Fig. 1B gezeigte Zustand stellt einen Vormontage- oder auch Transportzustand dar, in welchem das erste Bauteil 10 mitsamt der Toleranzausgleichsvorrichtung an einen bestimmungsgemäßen Montageort transportiert werden kann. Um zu verhindern, dass sich das Ausgleichselement 22 während des Transports beispielsweise aufgrund von Erschütterungen unbeabsichtigterweise aus dem Grundelement 14 herausdreht, steht die Transportsicherungszunge 36 des an dem Ausgleichselement 22 angebrachten Kunststoffrings 30 soweit über den unteren Rand der Außenwand 32 des Kunststoffrings 30 hervor, dass die Transportsicherungszunge 36 eine der Rippen 20 hintergreift und dadurch die Ausdrehbewegung des Ausgleichselements 22 begrenzt. Es versteht sich, dass die axiale Länge der Transportsicherungszunge 36, d.h. der maximale Überlapp zwischen Transportsicherungszunge 36 und Rippe 20, sowie der Abstand zwischen zwei benachbarten Rippen 20 und die Steigung des Innengewindes 16 und des Außengewindes 24 derart aneinander angepasst sein müssen, dass die Transportsicherungszunge 36 auch dann noch an einer Rippe 20 anstößt, wenn sich das Ausgleichselement 22 ausgehend von seiner Endposition um den Winkelabstand zwischen zwei benachbarten Rippen 20 relativ zu dem Grundelement 14 verdreht.

Zur Verbindung des mit der Toleranzausgleichsvorrichtung versehenen ersten Bauteils 10 mit dem designierten zweiten Bauteil wird ein in den Figuren nicht dargestelltes Verbindungselement, beispielsweise eine Schraube oder ein Gewindebolzen, zum Beispiel von dem zweiten Bauteil her, in den Figuren also von oben, durch die Toleranzausgleichsvorrichtung und korrespondierende Bohrungen in den Bauteilen hindurchgesteckt und in ein komplementäres Mutternelement eingeschraubt, welches beispielsweise an dem ersten Bauteil 10 festgelegt oder in das Grundelement 14 integriert sein kann.

Dabei sorgt die Einschraubbewegung des Verbindungselements in das Mutternelement dafür, dass das Ausgleichselement 22 aus dem Grundelement 14 soweit herausgedreht wird, bis es mit seiner Anlagefläche 28 an dem zweiten Bauteil in Eingriff gelangt. Es versteht sich, dass die Orientierung von Innengewinde 16 und Außengewinde 24 der Toleranzausgleichsvorrichtung einerseits und die Orientierung der Gewinde von Verbindungselement und Mutternelement entsprechend angepasst sein müssen. Bilden das Verbindungselement und das Mutternelement beispielsweise jeweils ein Rechtsgewinde und wird das Verbindungselement von Seiten des zweiten Bauteils her, d.h. also in den Figuren von oben, durch die Toleranzausgleichsvorrichtung hindurchgeführt und in das Mutternelement eingeschraubt, so muss es sich bei dem Innengewinde 16 und dem Außengewinde 24 um Linksgewinde handeln.

Zur Verbesserung der Übertragung von Drehmoment von dem Verbindungselement an das Ausgleichselement 22 ist ein Federclip 38 in dem Ausgleichselements 22 angeordnet, welcher sowohl mit dem sich durch die Toleranzausgleichsvorrichtung erstreckenden Verbindungselement als auch mit dem Ausgleichselement 22 in Eingriff steht. Es versteht sich, dass die Transportsicherungszunge 36 derart elastisch ausgebildet ist, dass das durch das Verbindungselement auf das Ausgleichselement 22 ausübbare Drehmoment ausreicht, um die Transportsicherungszunge 36 soweit zu verformen, dass sie die die Ausdrehbewegung begrenzende Rippe 20 überwinden und das Ausgleichselement 22 aus seinem in Fig. 1B gezeigten Transportzustand heraus gedreht werden kann.

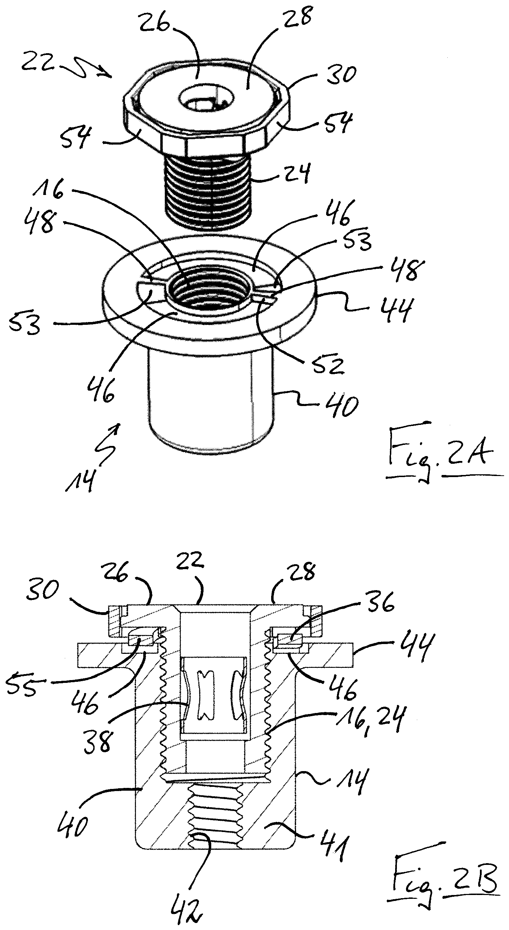

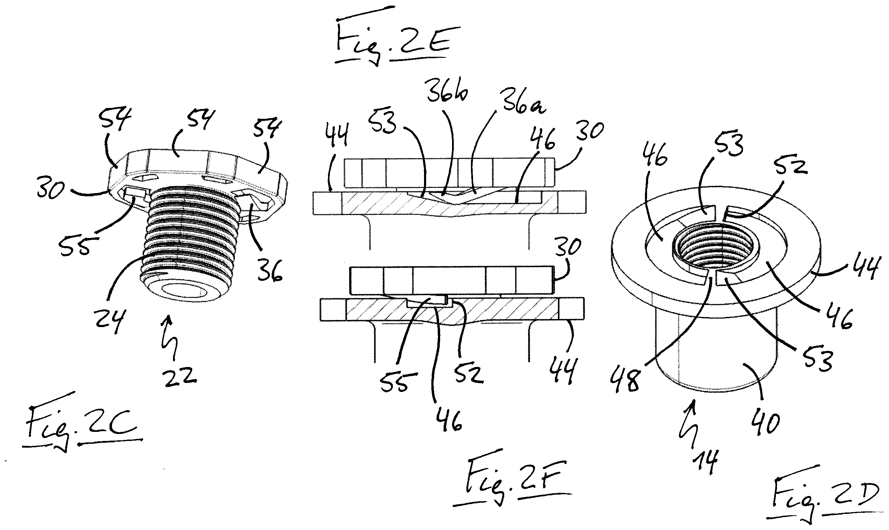

In Fig. 2A bis 2F ist eine zweite Ausführungsform einer Toleranzausgleichsvorrichtung mit einem Grundelement 14 und einem Ausgleichselement 22 dargestellt.

Das Grundelement 14 dieser Ausführungsform geht von einem topfförmigen Grundköper 40 mit einem Boden 41 aus, welcher eine Gewindebohrung 42 ausbildet, die als Mutternelement für ein nicht dargestelltes Verbindungselement dient. In einem in Fig. 2B oberhalb des Bodens 41 gelegenen hohlzylindrischen Abschnitt bildet das Grundelement 14 ein Innengewinde 16 aus, in welches das mit einem entsprechenden Außengewinde 24 versehene Ausgleichselement 22 eingeschraubt werden kann.

Im Bereich seiner dem Boden 41 abgewandten oberen Stirnseite bildet das Grundelement 14 ferner einen radial vorspringenden umlaufenden Flanschabschnitt 44 aus. In die dem Boden 41 abgewandte Oberseite des Flanschabschnitts 44 sind zwei sich in Drehrichtung des Ausgleichselements 22 erstreckende teilringförmige Nuten 46 eingebracht, welche durch zwei Stege 48 voneinander getrennt sind, die sich bezüglich der Längsmittelachse des Innengewindes 16 des Grundelements 14 radial erstrecken und in einer parallel zu der Längsmittelachse verlaufenden Ebene liegen. Die Stege 48 sind mit anderen Worten um einen Winkel von 180° zueinander beabstandet und definieren die Enden der Nuten 46. Konkret weist jede Nut 46 in Eindrehrichtung des Ausgleichselements 22 gesehen ein erstes Ende, welches an den einen Steg 48 angrenzt, und in Ausdrehrichtung des Ausgleichselements 22 gesehen ein zweites Ende auf, welches an den anderen Steg 48 angrenzt. Dabei wird das jeweilige erste Ende durch einen parallel zur Längsmittelachse orientierten Wandabschnitt 52 des angrenzenden Stegs 48 definiert, während im Bereich des jeweiligen zweiten Endes der Boden der Nut 46 in eine Rampe 53 übergeht, die sich bis zur Oberseite des angrenzenden Stegs 48 erstreckt.

Das Ausgleichselement 22 der zweiten Ausführungsform geht ähnlich wie das Ausgleichselement 22 der ersten Ausführungsform von einer hohlzylindrischen Grundform aus und weist ein zu dem Innengewinde 16 des Grundelements 14 komplementäres Außengewinde 24 auf. Entsprechend ist auch hier ein Federclip 38 im Inneren des Ausgleichselements 22 angeordnet, um die Übertragung von Drehmoment von einem durch die Toleranzausgleichsvorrichtung hindurchgesteckten Verbindungselement an das Ausgleichselement 22 zu optimieren. Wie das Ausgleichselement 22 der ersten Ausführungsform bildet auch das Ausgleichselement 22 der zweiten Ausführungsform im Bereich seiner dem Grundelement 14 abgewandten Stirnseite einen radial vorspringenden umlaufenden Kragen 26 aus, an welchem ein Kunststoffring 30 drehfest angebracht ist, beispielsweise durch aufpressen oder ankleben.

Im Unterschied zur ersten Ausführungsform ist eine Außenwand 32 des Kunststoffrings 30 gemäß zweiter Ausführungsform nicht mit einer Rändelung versehen, sondern die Außenwand 32 bildet sechs winkelig zueinander verlaufende Planflächen 54 aus, welche dem Kunststoffring 30 die Gestalt eines Sechskants verleihen und neben einer Verbesserung der Griffigkeit auch den Angriff eines Werkzeugs zur Verdrehung des Ausgleichselements 22 ermöglichen.

Im weiteren Unterschied zur ersten Ausführungsform weist der Kunststoffring 30 der zweiten Ausführungsform keine Transportsicherungszunge 36 auf, die sich ausschließlich axial, d.h. also in Richtung der Längsmittelachse erstreckt. Stattdessen bildet der Kunststoffring 30 eine sich in der Drehrichtung des Ausgleichselements 22 erstreckende Transportsicherungszunge 36 aus, die einen elastischen ersten Zungenabschnitt 36a und einen dazu abgewinkelten zweiten Zungenabschnitt 36b aufweist, wobei der erste Zungenabschnitt 36a schräg nach unten aus der dem Grundelement 14 zugewandten Unterseite des Kunststoffrings 30 hervor geht, d.h. sich sowohl in Drehrichtung als auch in Richtung des Grundelements 14 erstreckt, und sich der daran anschließende abgewinkelte zweite Zungenabschnitt 36b schräg nach oben erstreckt, d.h. mit einer Erstreckungskomponente in Drehrichtung und einer Erstreckungskomponente in Richtung des Kunststoffrings 30.

Die Neigung und Länge des sich schräg nach unten erstreckenden ersten Zungenabschnitts 36a ist so gewählt, dass die Transportsicherungszunge 36 in eine der Nuten 46 eintaucht, wenn das Ausgleichselement 22 soweit in das Grundelement 14 hineingedreht ist, dass es seinen eingedrehten Transportzustand einnimmt. Bewegt sich das Ausgleichselement 22 in dem Transportzustand in Ausdrehrichtung, so gerät die Transportsicherungszunge 36 an dem zweiten Ende der Nut 46 mit der Rampe 53 in Eingriff, wodurch die Ausdrehbewegung des Ausgleichselements 22 begrenzt wird. Konkret läuft der schräg nach oben abgewinkelte zweiten Zungenabschnitt 36b hierbei auf die Rampe 53 auf. Ist ein auf das Ausgleichselement 22 ausgeübtes Drehmoment ausreichend groß, wie es beispielsweise der Fall ist, wenn ein sich durch die Toleranzausgleichsvorrichtung hindurch erstreckendes Verbindungselement in die Gewindebohrung 42 eingeschraubt wird, so wird die auf die Rampe 53 auflaufende Transportsicherungszunge 36 soweit nach oben ausgelenkt, dass die Transportsicherungszunge 36 den an die Rampe 53 angrenzenden Steg 48 überwinden und das Ausgleichselement 22 anschließend frei aus dem Grundelement 14 herausgedreht werden kann.

Zusätzlich zu der Transportsicherungszunge 36 bildet der Kunststoffring 30 eine Anschlagszunge 55 aus, welche sich in Eindrehrichtung von der Unterseite des Kunststoffrings 30 aus schräg nach unten in Richtung des Grundelements 14 erstreckt. Die Anschlagszunge 55 ist in Drehrichtung gesehen um etwa 180° zu der Transportsicherungszunge 36 angeordnet und ragt axial soweit nach unten hervor, dass sie in die andere Nut 46 des Grundelements 14 eintaucht, wenn das Ausgleichselement 14 in das Grundelement 14 eingeschraubt ist und seinen Transportzustand einnimmt. Durch ein Anschlagen der Anschlagszunge 55 an den Wandabschnitt 52 des das erste Ende der anderen Nut 46 begrenzenden Stegs 48 wird die Eindrehbewegung des Ausgleichselements 14 begrenzt, d.h. die Anschlagszunge 55 übernimmt in diesem Fall die Funktion eines Endanschlags.

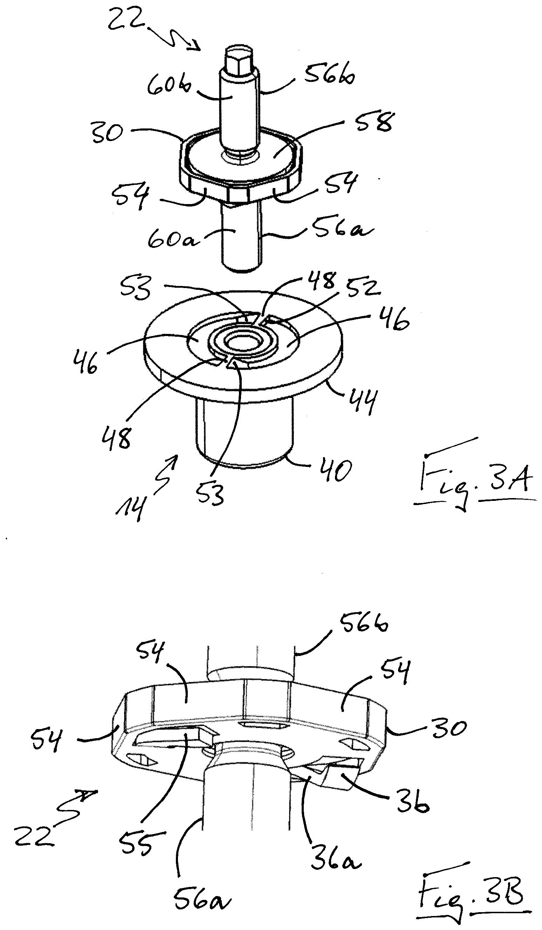

In Fig. 3A und 3B ist eine dritte Ausführungsform einer Toleranzausgleichsvorrichtung dargestellt, deren Grundelement 14 ähnlich wie das Grundelement 14 der zweiten Ausführungsform ausgebildet ist und insbesondere einen Flanschabschnitt 44 mit zwei Nuten 46 und zwei Stegen 48 der voranstehend beschriebenen Art aufweist. Im Unterschied zur zweiten Ausführungsform bildet das Grundelement 14 der dritten Ausführungsform jedoch keine als Mutternelement für das Verbindungselement dienende Gewindebohrung 42, sondern lediglich ein Innengewinde 16 aus.

Im weiteren Unterschied zur zweiten Ausführungsform ist das Ausgleichselement 22 der dritten Ausführungsform nicht hohlzylindrisch ausgebildet, sondern in Form eines Gewindebolzens, welcher einen ersten Gewindeabschnitt 56a und einen durch einen Mittelbund 58 davon getrennten zweiten Gewindeabschnitt 56b aufweist. Der erste Gewindeabschnitt 56a bildet ein zu dem Innengewinde 16 des Grundelements 14 komplementäres erstes Außengewinde 60a aus, sodass sich der erste Gewindeabschnitt 56a des Ausgleichselements 22 in das Innengewinde 16 des Grundelements 14 einschrauben lässt. Der zweite Gewindeabschnitt 56b bildet ein zweites Außengewinde 60b aus und ist zur Aufnahme eines nicht dargestellten Mutternelements vorgesehen. Die Orientierungen der Außengewinde 60a, 60b können grundsätzlich gleich oder unterschiedlich sein. Im dargestellten Ausführungsbeispiel handelt es sich bei dem ersten Außengewinde 60a um ein Linksgewinde und bei dem zweiten Außengewinde 60b um ein Rechtsgewinde. Hierdurch ist sichergestellt, dass wenn das Ausgleichselement 22 beim Aufschrauben des Mutternelements auf den zweiten Gewindeabschnitt 56b versehentlich mitgedreht wird, sich das Ausgleichselement 22 jedenfalls nicht in das Grundelement 14 hineingedreht, sondern allenfalls aus diesem heraus.

An dem Mittelbund 58 ist ein Kunststoffring 30 von der Art angebracht, wie er in Verbindung mit der zweiten Ausführungsform beschrieben wurde. Durch das Zusammenwirken der Transportsicherungszunge 36 und der Anschlagszunge 55 des Kunststoffrings 30 mit den im Flanschabschnitt 44 des Grundelements 14 ausgebildeten Nuten 46 und Stegen 48 kann folglich auch das als Gewindebolzen ausgebildete Ausgleichselement 22 im in das Grundelement 14 eingeschraubten Transportzustand gegen Verklemmung und unbeabsichtigtes Herausdrehen gesichert werden.

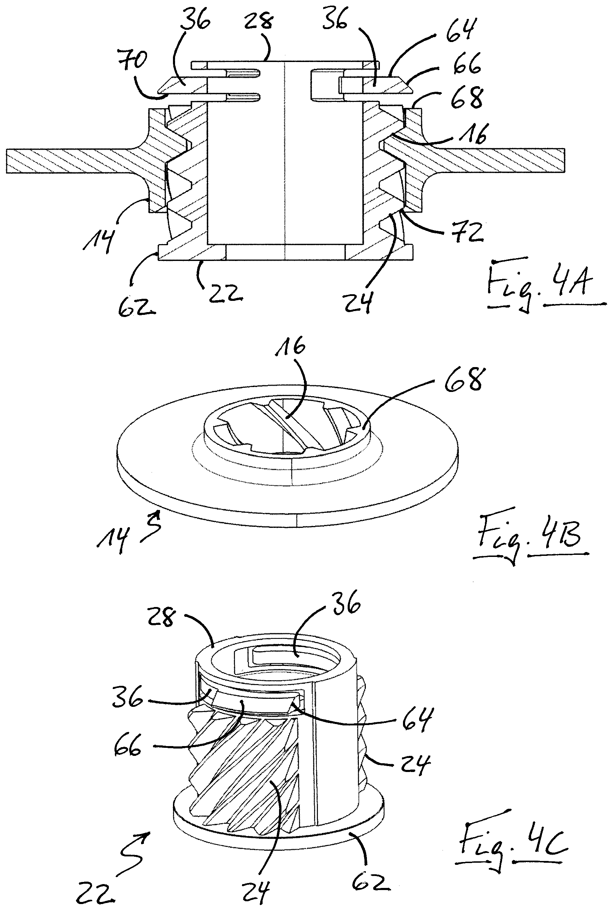

In Fig. 4A bis 4C ist eine vierte Ausführungsform einer Toleranzausgleichsvorrichtung dargestellt. Auch diese umfasst ein Grundelement 14, welches in ein hier nicht gezeigtes erstes Bauteil 10 integriert ist und eine hohlzylindrische Grundform aufweist sowie ein Innengewinde 16, hier ein Rechtsgewinde, ausbildet, dessen Längsmittelachse eine axiale Richtung definiert.

Des Weiteren umfasst auch die Toleranzausgleichsvorrichtung gemäß vierter Ausführungsform ein Ausgleichselement 22, welches ähnlich wie das Ausgleichselement 22 der ersten Ausführungsform von einer hohlzylindrischen Grundform ausgeht und ein zu dem Innengewinde 16 des Grundelements 14 komplementäres Außengewinde 24 aufweist. Des Weiteren kann auch im vorliegenden Fall ein nicht dargestellter Federclip 38 im Inneren des Ausgleichselements 22 angeordnet sein, um die Übertragung von Drehmoment von einem durch die Toleranzausgleichsvorrichtung hindurchgesteckten Verbindungselement an das Ausgleichselement 22 zu optimieren.

Im Unterschied zu der ersten Ausführungsform wird das Ausgleichselement 22 der vierten Ausführungsform von einer dem zweiten Bauteil abgewandten Seite her in das erste Bauteil 10 eingeschraubt, in Fig. 4A also von unten. Das Ausgleichselement 22 weist an seinem dem zweiten Bauteil zugewandten oberen Stirnende folglich keinen Kragen 26 auf. Vielmehr wird die an dem zweiten Bauteil zur Anlage gelangende Anlagefläche 28 durch die ringförmige Stirnfläche des hohlzylindrischen Grundkörpers des Ausgleichselements 22 gebildet.

Ein radial vorspringender umlaufender Kragen 62 ist stattdessen an dem entgegengesetzten unteren, d.h. dem zweiten Bauteil abgewandten, Stirnende des Ausgleichselements 22 ausgebildet. Dieser Kragen 62 dient dazu, die Eindrehbewegung des Ausgleichselements 22, in Fig. 4A von unten, in das Grundelement 14 und somit auch die Ausdrehbewegung des Ausgleichselements 22 in Richtung des zweiten Bauteils, in Fig. 4A also nach oben aus dem Grundelement 14 heraus, zu begrenzen.

Das Ausgleichselement 22 ist ferner mit mindestens einer elastisch verformbaren Transportsicherungszunge 36 zur Sicherung des in das Grundelement 14 eingedrehten Ausgleichselements 22 gegen ein unbeabsichtigtes Herausdrehen, beispielsweise während des Transports, versehen. Im gezeigten Ausführungsbeispiel weist das Ausgleichselement 22 zwei Transportsicherungszungen 36 auf, die in Umfangsrichtung gesehen um 180° zueinander versetzt angeordnet sind.

Die Transportsicherungszungen 36 gehen in Umfangsrichtung aus dem hohlzylindrischen Grundkörper des Ausgleichselements 22 hervor und bilden jeweils einen Vorsprung 64 aus, der in einer Ruhestellung der Transportsicherungszunge 36 das Außengewinde 24 radial nach außen überragt und an dessen dem zweiten Bauteil zugewandten Oberseite eine Schrägfläche 66 vorgesehen ist. Wird das Ausgleichselement 22 in das Grundelement 14 eingeschraubt, in Fig. 4A von unten, so läuft das Innengewinde 16 des Grundelements 14 auf die Schrägflächen 66 auf und die Transportsicherungszungen 36 werden entgegen ihrer Federkraft radial nach innen gedrückt, d.h. sie weichen nach innen aus, um den Eintritt des Ausgleichselements 22 in das Grundelement 14 zu ermöglichen.

Sobald das Ausgleichselement 22 soweit in das Grundelement 14 eingeschraubt ist, dass das obere Stirnende des Ausgleichselements 22 oben aus dem Grundelement 14 heraus tritt und die Transportsicherungszungen 36 und das Innengewinde 16 des Grundelements 14 außer Eingriff geraten, springen die Transportsicherungszungen 36 wieder radial nach außen in ihre Ruhestellung, in welcher die Vorsprünge 64 das Außengewinde 24 des Ausgleichselements 22 und somit zumindest teilweise auch die obere Stirnseite 68 des Grundelements 14 radial überragen. Da sowohl die obere Stirnseite 68 des Grundelements 14 als auch die der oberen Stirnseite des Grundelements 14 zugewandten Unterseiten 70 der Vorsprünge 64 im Wesentlichen plan ausgebildet sind und rechtwinklig zur Längsmittelachse verlaufen, sichern die Transportsicherungszungen 36 das Ausgleichselements 22 gegen ein unbeabsichtigtes Herausdrehen nach unten aus dem Grundelement 14 heraus, sobald sie an der oberen Stirnseite 68 des Grundelements 14 anschlagen. Die obere Stirnseite 68 des Grundelements 14 bildet in diesem Fall also einen ersten Anschlag für die Transportsicherungszungen 36.

Zusätzlich bildet das Grundelement 14 noch einen zweiten Anschlag für die Transportsicherungszungen 36 aus, nämlich im Bereich einer unteren Stirnseite des Grundelements 14. Dieser zweite Anschlag wird durch einen radial nach innen gerichteten Vorsprung 72 gebildet, welcher auf die Schrägflächen 66 der Transportsicherungszungen 36 aufläuft, um diese radial nach innen zu drücken, und welcher von den Transportsicherungszungen 36 hintergriffen wird, sobald diese den Vorsprung 72 beim Einschrauben des Ausgleichselements 22 von unten in das Grundelement 14 in axialer Richtung überwunden haben. Durch den Vorsprung 72 ist also auch ein lediglich teilweise in das Grundelement 14 eingeschraubtes Ausgleichselement 22 bereits gegen ein unbeabsichtigtes Herausdrehen, in Fig. 4A nach unten, gesichert.

### Bezugszeichenliste

- 10: erstes Bauteil
- 14: Grundelement
- 16: Innengewinde
- 18: Mantelfläche
- 20: Rippe
- 21: Oberseite
- 22: Ausgleichselement
- 24: Außengewinde
- 26: Kragen
- 28: Anlagefläche
- 30: Kunststoffring
- 32: Außenwand
- 34: Rändelung
- 36: Transportsicherungszunge
- 36a: erster Zungenabschnitt
- 36b: zweiter Zungenabschnitt
- 37: unterer Rand
- 38: Federclip
- 40: Grundkörper
- 41: Boden
- 42: Gewindebohrung
- 44: Flanschabschnitt
- 46: Nut
- 48: Steg
- 52: Wandabschnitt
- 53: Rampe
- 54: Planfläche
- 55: Anschlagszunge
- 56a: erster Gewindeabschnitt
- 56b: zweiter Gewindeabschnitt
- 58: Mittelbund
- 60a: erstes Außengewinde
- 60b: zweites Außengewinde
- 62: Kragen
- 64: Vorsprung
- 66: Schrägfläche
- 68: obere Stirnseite
- 70: Unterseite
- 72: Vorsprung

## Patentansprüche

1. Toleranzausgleichsvorrichtung zur Überbrückung eines Abstandes zwischen zwei miteinander zu verbindenden Bauteilen, umfassend ein Grundelement (14) und ein in das Grundelement (14) einschraubbares Ausgleichselement (22), wobei:
das Grundelement (14) mindestens einen Anschlag (20, 48, 68) ausbildet,
das Ausgleichselement (22) mindestens ein elastisch verformbares Transportsicherungsmittel (36) aufweist, welches derart ausgebildet ist, dass es für ein Einschrauben des Ausgleichselements (22) in das Grundelement (14) den Anschlag (20, 48, 68) unter temporärer Verformung überwinden muss,
das Ausgleichselement (22) einen radial vorspringenden Kragen (26, 62) ausbildet und
ein Kunststoffring (30) drehfest an dem Kragen (26) angebracht ist, welcher das mindestens eine elastisch verformbare Transportsicherungsmittel (36) ausbildet.

2. Toleranzausgleichsvorrichtung nach Anspruch 1,
**dadurch gekennzeichnet, dass**
das Ausgleichselement (22) mindestens einen Endanschlag (37, 55) aufweist, welcher mit dem oder einem Anschlag (20, 48) des Grundelements (14) in Eingriff bringbar ist, um die Einschraubbewegung des Ausgleichselements (22) in das Grundelement (14) zu begrenzen.

3. Toleranzausgleichsvorrichtung nach Anspruch 1 oder 2,
**dadurch gekennzeichnet, dass**
das mindestens eine elastisch verformbare Transportsicherungsmittel (36) durch eine von dem Kragen (26) des Ausgleichselements (22) in Richtung Grundelement (14) zumindest bereichsweise axial vorspringende Federzunge (36) gebildet ist.

4. Toleranzausgleichsvorrichtung nach zumindest einem der vorherigen Ansprüche,
**dadurch gekennzeichnet, dass**
der Kunststoffring (30) mindestens einen Endanschlag (37, 55) des Ausgleichselements (22) ausbildet.

5. Toleranzausgleichsvorrichtung nach zumindest einem der vorherigen Ansprüche,
**dadurch gekennzeichnet, dass**
der Kunststoffring (30) eine Mantelfläche mit einer die Griffigkeit erhöhenden Struktur, beispielsweise mit einer Rändelung (34) oder mit einer Vielzahl von Planflächen (54), aufweist.

6. Toleranzausgleichsvorrichtung nach zumindest einem der vorherigen Ansprüche,
**dadurch gekennzeichnet, dass**
der mindestens eine Anschlag des Grundelements (14) durch eine radial vorspringende Rippe (20), durch einen Steg (48) oder Wandabschnitt (52, 53), der eine in einer dem Ausgleichselement (22) zugewandten Oberfläche des Grundelements (14) ausgebildete Tasche oder Nut (46) begrenzt, durch eine Stirnseite (68) des Grundelements (14) und/oder durch einen radial nach innen gerichteten Vorsprung (72) des Grundelements (14) definiert ist.

7. Toleranzausgleichsvorrichtung nach zumindest einem der vorherigen Ansprüche,
**dadurch gekennzeichnet, dass**
das Grundelement (14) einen ersten Anschlag für ein Zusammenwirken mit dem Transportsicherungsmittel (36) und einen zweiten Anschlag für ein Zusammenwirken mit einem Endanschlag (37, 55) des Ausgleichselements (22) ausbildet.

8. Toleranzausgleichsvorrichtung nach zumindest einem der vorherigen Ansprüche,
**dadurch gekennzeichnet, dass**
das Grundelement (14) ein integraler Bestandteil des einen Bauteils (10) ist.

9. Ausgleichselement (22) für eine Toleranzausgleichsvorrichtung, insbesondere nach zumindest einem der vorherigen Ansprüche, umfassend mindestens ein elastisch verformbares Transportsicherungsmittel (36), welches derart ausgebildet ist, dass es für ein Einschrauben des Ausgleichselements (22) in ein korrespondierendes Grundelement (14) einen Anschlag (20, 48) des Grundelements (14) unter temporärer Verformung überwinden muss, wobei das Ausgleichselement (22) einen radial vorspringenden Kragen (26, 62) ausbildet und ein Kunststoffring (30) drehfest an dem Kragen (26) angebracht ist, welcher das mindestens eine elastisch verformbare Transportsicherungsmittel (36) ausbildet.

## Claims

1. A tolerance compensation device for bridging a distance between two components to be connected to one another, comprising a base element (14) and a compensating element (22) which can be screwed into the base element (14), wherein:
the base element (14) forms at least one stop (20, 48, 68),
the compensating element (22) has at least one elastically deformable transport securing means (36) which is designed in such a way that it must overcome the stop (20, 48, 68) with temporary deformation in order to screw the compensating element (22) into the base element (14),
the compensating element (22) forms a radially projecting collar (26, 62) and
a plastic ring (30) is attached to the collar (26) in a rotationally fixed manner, which ring forms the at least one elastically deformable transport securing means (36).

2. A tolerance compensation device in accordance with claim 1,
**characterized in that**
the compensating element (22) has at least one end stop (37, 55) which can be engaged with the/a stop (20, 48) of the base element (14) in order to limit the screwing movement of the compensating element (22) into the base element (14).

3. A tolerance compensation device in accordance with claim 1 or 2,
**characterized in that**
the at least one elastically deformable transport securing means (36) is formed by a spring tongue (36) which projects axially at least in part from the collar (26) of the compensating element (22) in the direction of the base element (14).

4. A tolerance compensation device in accordance with at least one of the preceding claims,
**characterized in that**
the plastic ring (30) forms at least one end stop (37, 55) of the compensating element (22).

5. A tolerance compensation device in accordance with at least one of the preceding claims,
**characterized in that**
the plastic ring (30) has a lateral surface with a structure that increases the grip, for example with knurling (34) or with a plurality of planar surfaces (54).

6. A tolerance compensation device in accordance with at least one of the preceding claims,
**characterized in that**
the at least one stop of the base element (14) is defined by a radially projecting rib (20), by a web (48) or wall portion (52, 53) which delimits a pocket or groove (46) formed in a surface of the base element (14) facing the compensating element (22), by an end face (68) of the base element (14) and/or by a radially inwardly directed projection (72) of the base element (14).

7. A tolerance compensation device in accordance with at least one of the preceding claims,
**characterized in that**
the base element (14) forms a first stop for interaction with the transport securing means (36) and a second stop for interaction with an end stop (37, 55) of the compensating element (22).

8. A tolerance compensation device in accordance with at least one of the preceding claims,
**characterized in that**
the base element (14) is an integral part of the one component (10).

9. A compensating element (22) for a tolerance compensation device, in particular in accordance with at least one of the preceding claims, comprising at least one elastically deformable transport securing means (36) which is designed in such a way that it must overcome a stop (20, 48) of the base element (14) with temporary deformation in order for the compensating element (22) to be screwed into a corresponding base element (14), with the compensating element (22) forming a radially projecting collar (26, 62) and a plastic ring (30) being attached to the collar (26) in a rotationally fixed manner, which ring forms at least one elastically deformable transport securing means (36).

## Revendications

1. Dispositif de compensation des tolérances, destiné à combler une distance entre deux composants à relier entre eux, comprenant un élément de base (14) et un élément de compensation (22) apte à être vissé dans l'élément de base (14), dans lequel :
l'élément de base (14) forme au moins une butée (20, 48, 68),
l'élément de compensation (22) présente au moins un moyen de blocage (36) pour le transport, déformable élastiquement, qui est conçu de telle sorte que, pour un vissage de l'élément de compensation (22) dans l'élément de base (14), il doit surmonter la butée (20, 48, 68) en subissant une déformation temporaire,
l'élément de compensation (22) forme une collerette (26, 62) qui fait saillie radialement, et
une bague en matière plastique (30) est montée solidairement en rotation sur la collerette (26), laquelle forme ledit au moins un moyen de blocage (36) pour le transport, déformable élastiquement.

2. Dispositif de compensation des tolérances selon la revendication 1,
**caractérisé en ce que**
l'élément de compensation (22) comporte au moins une butée de fin de course (37, 55) qui peut être mise en prise avec la ou une butée (20, 48) de l'élément de base (14) pour limiter le mouvement de vissage de l'élément de compensation (22) dans l'élément de base (14).

3. Dispositif de compensation des tolérances selon la revendication 1 ou 2,
**caractérisé en ce que**
ledit au moins un moyen de blocage (36) pour le transport, déformable élastiquement, est formé par une languette élastique (36) qui fait saillie, au moins localement, axialement depuis la collerette (26) de l'élément de compensation (22) en direction de l'élément de base (14).

4. Dispositif de compensation des tolérances selon l'une au moins des revendications précédentes,
**caractérisé en ce que**
la bague en matière plastique (30) forme au moins une butée de fin de course (37, 55) de l'élément de compensation (22).

5. Dispositif de compensation des tolérances selon l'une au moins des revendications précédentes,
**caractérisé en ce que**
la bague en matière plastique (30) présente une surface enveloppe ayant une structure augmentant l'adhérence, par exemple ayant un moletage (34) ou une multitude de surfaces planes (54).

6. Dispositif de compensation des tolérances selon l'une au moins des revendications précédentes,
**caractérisé en ce que**
ladite au moins une butée de l'élément de base (14) est définie par une nervure (20) faisant saillie radialement, par une barrette (48) ou par une section de paroi (52, 53) qui délimite une poche ou une rainure (46) formée dans une surface de l'élément de base (14) tournée vers l'élément de compensation (22), par une face frontale (68) de l'élément de base (14) et/ou par une saillie (72) de l'élément de base (14) dirigée radialement vers l'intérieur.

7. Dispositif de compensation des tolérances selon l'une au moins des revendications précédentes,
**caractérisé en ce que**
l'élément de base (14) forme une première butée, destinée à une coopération avec le moyen de blocage (36) pour le transport, et une deuxième butée destinée à une coopération avec une butée de fin de course (37, 55) de l'élément de compensation (22).

8. Dispositif de compensation des tolérances selon l'une au moins des revendications précédentes,
**caractérisé en ce que**
l'élément de base (14) fait partie intégrante de l'un des composants (10).

9. Elément de compensation (22) pour un dispositif de compensation des tolérances, en particulier selon l'une au moins des revendications précédentes, comprenant au moins un moyen de blocage (36) pour le transport, déformable élastiquement, qui est conçu de telle sorte que, pour un vissage de l'élément de compensation (22) dans un élément de base (14) correspondant, il doit surmonter une butée (20, 48) de l'élément de base (14) en subissant une déformation temporaire, l'élément de compensation (22) formant une collerette (26, 62) qui fait saillie radialement, et une bague en matière plastique (30) étant montée solidairement en rotation sur la collerette (26), laquelle forme ledit au moins un moyen de blocage (36) pour le transport, déformable élastiquement.
